# EUROPEAN PATENT SPECIFICATION

(11) **EP 1 295 552 B1**
(45) Date of publication and mention of the grant of the patent: **17.11.2004**
(21) Application number: 01500279.3
(22) Date of filing: 30.11.2001
(51) Int. Cl.: A47J 27/09

(54) **Pressure control valve**
Drucksteuerventil
Soupape de commande de pression

(30) Priority: 25.09.2001 ES 200102357
(43) Date of publication of application: 26.03.2003
(73) Proprietor: Compania de Menaje Domestico SL, 48160 Derio (Vizcaya) (ES)
(72) Inventor: Capellan Martinez, José Luis, 48010 Bilbao (Vizcaya) (ES)
(74) Representative: Davila Baz, Angel

(56) References cited:
- DE-A- 2 353 384
- US-A- 3 682 438
- US-A- 4 545 405
- US-A- 4 560 143
- US-A- 4 741 325

## Description

### OBJECT OF THE INVENTION

The present invention relates to a pressure control valve meant for use in a pressure cooker, so that said cooker may work in different modes at different pressures, as well as for establishing pressure release and disassembly positions of the valve for its maintenance.

### BACKGROUND OF THE INVENTION

Pressure cookers must incorporate a safety valve to limit the working pressure so that they do not explode due to an excessive inner pressure which overcomes the mechanical strength of closure parts of the lid over the cooker body. This safety valve can also be used as a pressure release valve which can be actuated immediately before opening the cooker.

Also known are pressure cookers with safety valves which allow two working pressures, used depending on the cooking requirements of different food products.

However, known solutions in this sense are structurally complex and difficult to operate by the users.

### DESCRIPTION OF THE INVENTION

The pressure control valve of the invention allows two operation modes, one at a low pressure and one at a high pressure, and additionally allows its use as a pressure release valve, all of this by means of a single control unit which may easily disassembled and assembled from the rest of the valve assembly in order to facilitate its maintenance.

For this purpose and more specifically, the valve disclosed comprises a chimney made from a tubular element provided with one threaded end which allows attachment to an orifice of the cooker lid together with the corresponding bolt; said chimney is provided with an intermediate segment with a polygonal shape through which a cam is coupled so that it may move in an axial sense but not in an angular one. On this cam is mounted a control unit with a pair of lateral and internal supports which respectively act on the top and bottom edges of the cam. Said cam is constantly pushed towards the cooker lid by a spring mounted coaxially inside the lid, between said cam and the chimney. One end of this spring acts on the bottom end of the cam while the other end rests on the polygonal widened segment of the chimney.

The special perimetral shape of each cam base and the presence in said base of a groove placed in line with one of its axes allows to mount the control unit without requiring screws or any other union means, as well as providing three stable positions for the cam when said control unit is turned: one in which a closing cone mounted internally and centrally on the control unit is slightly separated from the top end of the chimney, thereby allowing the cooker to release pressure; another in which the cam rises with respect to the lid pushing the cone against the chimney by means of the spring, which corresponds to the low-pressure mode of operation; and another one in which the cam is further raised , in which the spring tension is consequently higher and in which the pressure cooker operates at a high pressure.

For this purpose, the top edge of the cam is provided between the two diametrically opposite grooves with two end horizontal segments and an intermediate inclined segment, while the bottom edge is provided with a horizontal segment placed opposite the higher segment of the top edge and with two stepped segments which progressively decrease and which are a prolongation of the previous one.

### DESCRIPTION OF THE DRAWINGS

In order to complement this description and w ith the purpose of assisting in a better understanding of the characteristics of the invention, in accordance with a preferred practical embodiment thereof, this description is completed with a set of drawings which, as an integral part of said description, shows the following in an illustrative but non-restrictive manner.
Figure 1 shows a perspective exploded view of the pressure control valve which is the object of the invention.
Figure 2 shows a side elevation and sectional view of the assembly of the previous figure, duly assembled, coupled to the cooker lid and inserted in a housing of the cooker handle.
Figure 3 shows a plan view of the assembly of the previous figure, corresponding as in said previous figure to the situation of assembly and extraction of the control unit.
Figures 4 and 5 show similar representations to those of figures 2 and 3, but corresponding to the low pressure operation situation.
Figures 6 and 7 in turn show representations similar to figures 2 and 3 but here corresponding to the high-pressure operation mode.
Figures 8 and 9 again show representations similar to figures 2 and 3 here corresponding to the pressure release mode.
Figure 10, finally, shows the structure of the cam.

### PREFERRED EMBODIMENT OF THE INVENTION

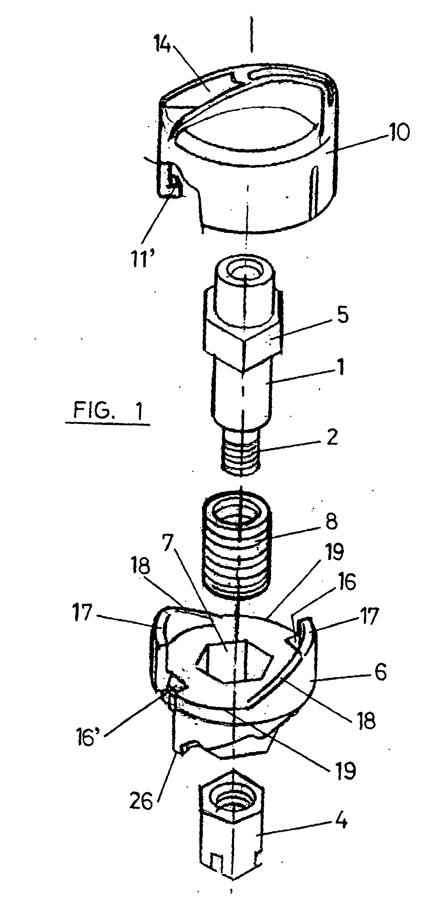

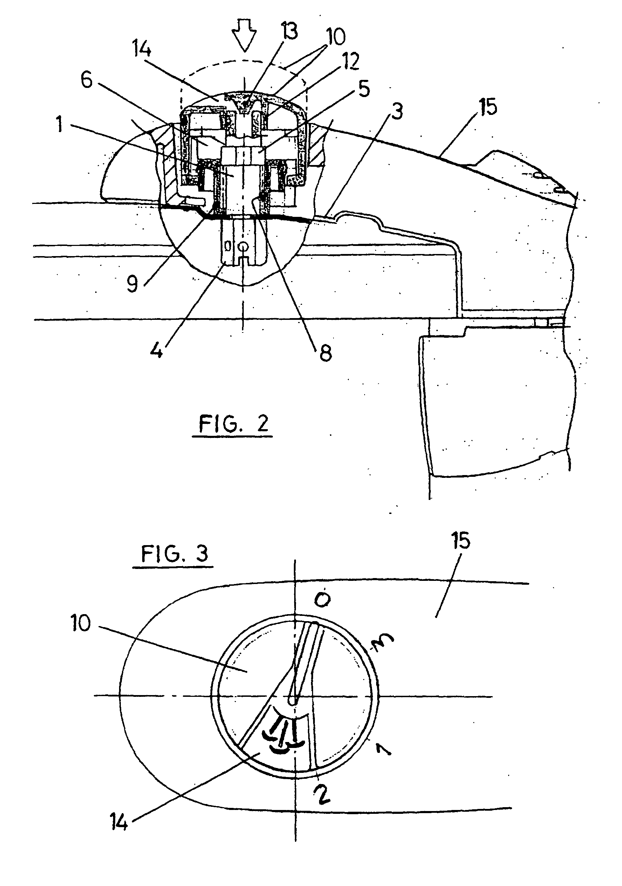

In view of the above figures, and particularly of figure 1, the pressure control valve of the invention can be seen to comprise a chimney (1), basically tubular and cylindrical, with its bottom end (2) threaded for attachment to the cooker lid (3), figure 2, with the aid of a bolt (4) and having an intermediate segment (5) with a polygonal shape and which juts out. On one end of this segment is a guide for mounting a cam (6) which has also an axial complementary orifice (7), so that said cam (6) can move axially along the chimney (1) but cannot move angularly. The other end of the polygonal segment (5) of the chimney (1) acts as a fixed upper stop for a spring (8) which is mounted coaxially on the chimney (1) and which rests on the bottom on the lower strangled end (9) of the cam (6), which partially and circumferentially closes the lower opening of the axial orifice (7).

The structure described above is complemented by a control unit (10) in the form of a cylindrical bushing open on its bottom, provided with lateral and lower supports on the top (11) and bottom (11a-11b) with different widths and provided on its top, mostly closed face with a neck (12) which is coupled coaxially to the top end of the chimney (1), so that the latter acts as a guide for said control unit. The neck (12) embraces an upper closing cone (13) next to which is provided a lateral and upper opening (14) facing in the direction opposite the cooker handle (15), so that the pressure discharge through said opening (14) is directed towards the side of the cooker opposite said handle (15) and therefore does not imply a hazard to the person using the cooker, specifically during the pressure release stage.

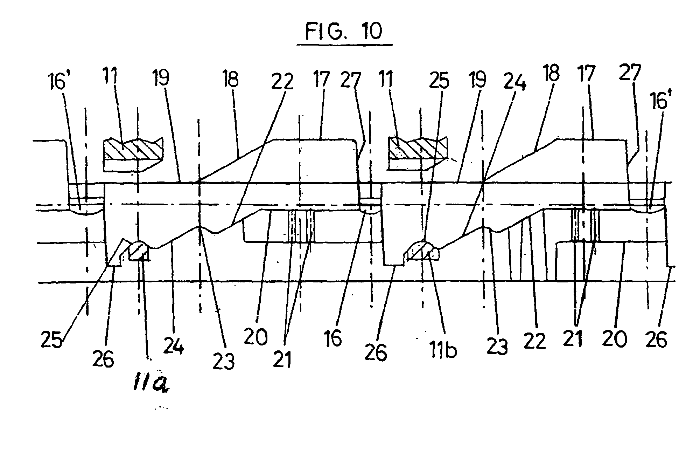

As can be better seen in figure 10, the cam (6) is provided with a pair of lateral vertical grooves (16-16') placed diametrically opposite each other. In each of the two halves defined by said grooves and on the top edge of the cam are provided an upper horizontal plane (17), an inclined plane (18) and a horizontal bottom plane (19), while on the bottom of the cam are provided a first horizontal plane (20) prolonged inferiorly by two vertical ribs (21), a first inclined plane (22), behind which is a raised stability point (23), another inclined plane (24) parallel to the plane (22) and beneath it, and ending in a another stability point (25), similar to the aforementioned point (23) and closed by a stepped stop (26).

In accordance with this structure the operation of the valve is as follows:

In the position of figure 2, where the control unit (10) is represented by a discontinuous line and disassembled, said control unit can be axially coupled to the chimney (1) in the sense shown by the arrow of the figure, in a position in which each lower support (11a-11b) is placed opposite the corresponding groove (16-16'). As the lower supports (11a-11b) are inserted in the grooves (16-16') the upper supports (11) will eventually meet the top horizontal plane (17) of the cam (6), allowing the upper closing cone (13) of the control unit (10) to be separated from the top opening of the chimney (1). If the control unit (10) is turned in a clockwise sense the contact will last until the upper supports (11) reach the ramp (18). As the upper supports (11) move along the top horizontal plane (17) the lower supports (11a-11b) are slightly separated from the horizontal plane (20).

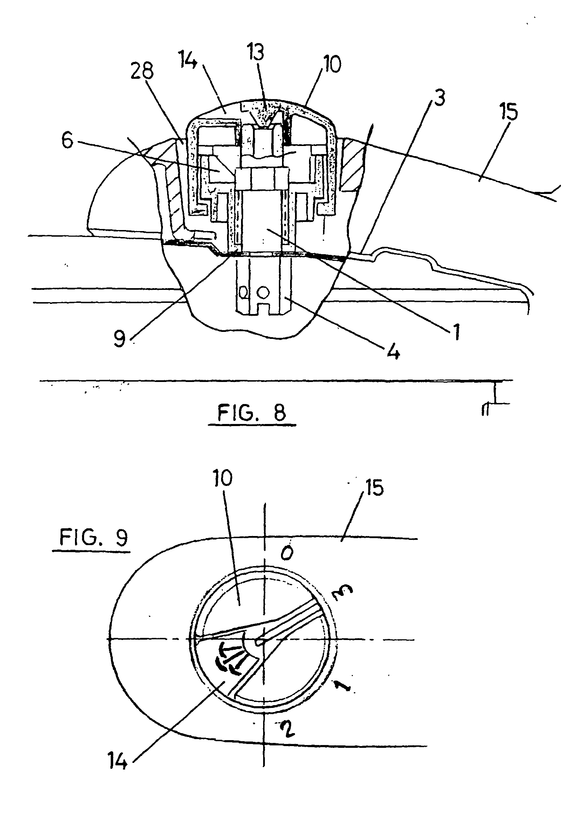

During this turning the lower supports (11a-11b) slide on the horizontal sector (20) of the cam until reaching a stable position in which it is included between the pair of vertical ribs (21). This position corresponds to the pressure release, as shown in the figures 8 and 9, while the upper support (11) slides on the horizontal sector (17) of the top edge of the cam. In this position, and as seen in figure 8, the cone (13) of the control unit is slightly separated from the top opening of the chimney (1) allowing the pressure release of the cooker as pressurised steam is released through the opening (14).

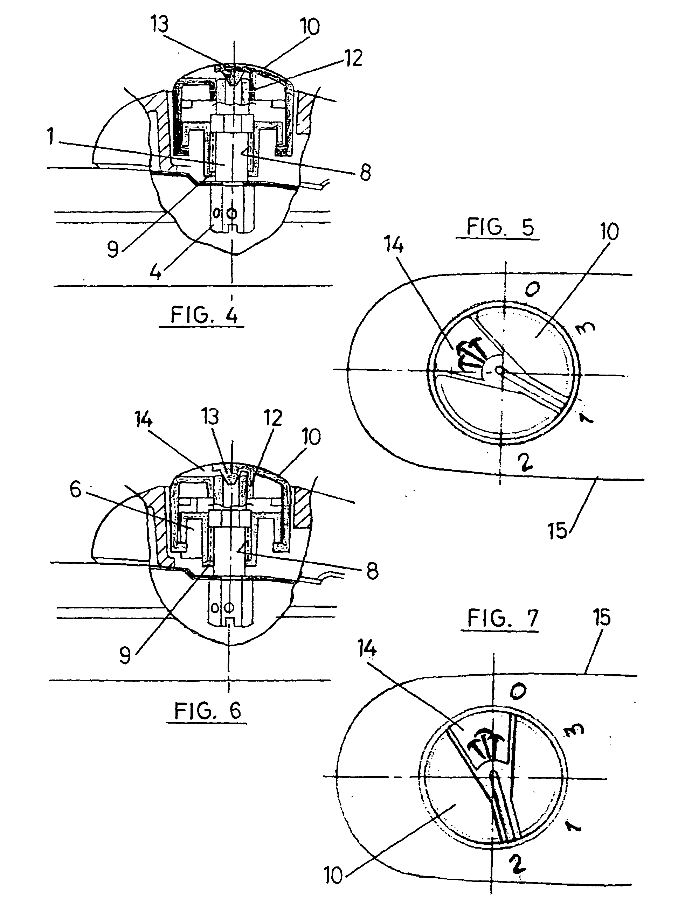

If the control unit (10) is turned further in the same sense the upper supports (11) and lower supports (11a-11b) slide on the ramps (18) and (22) until the lower supports meet the raised position (23), where the upper support is separated from the corresponding edge of the cam. This stable situation corresponds to operation at a low pressure, where the cone (13) seals the top end of the chimney (1) against the tension of the spring (8), as shown in figures 4 and 5.

If the control unit (10) is again turned further in the same sense, the raised position (25) is reached by the lower supports (11a-11b), where the tension of the spring (8) is considerably greater, as shown in figures 6 and 7. This position corresponds to that of operation at a high pressure.

Naturally, turning the control unit in the opposite sense, that is anticlockwise, will lead from the raised position (25) to raised position (23), that is, from the situation of high pressure to that of operation at a low pressure, and then to the position corresponding to the horizontal sector (20) of the lower edge of the cam (6), which corresponds to the pressure-release stage. If this position is passed the lower support (11') is finally placed opposite the groove (16) and the control unit can be removed by a simple axial pull.

The valve assembly is mainly housed within a housing (28) of the handle (15). The various working positions for the device are clearly shown in the control unit (10), as shown in figures 3, 5, 7 and 9.

## Claims

1. Pressure control valve, particularly applicable to pressure cookers and meant to allow at least three working positions, one for releasing pressure, one for operation at a low pressure and another for operation at a high pressure, comprising a basically cylindrical tubular chimney (1) being provided on its bottom end with a threaded segment (2) destined to penetrate the cooker lid (3) and to be immovably attached to it by a bolt (4), and which is also provided on its intermediate segment with a polygonal segment (5) by which the chimney (1) is coupled to a cam (6), which in turn is provided with an axial and also polygonal orifice (7) which fixes the angular position of the cam (6) with respect to the chimney (1), thereby allowing its axial displacement; placed between the chimney (1) and the cam (6) is a spring (8) which constantly pushes the cam (6) against the cooker lid (3); this assembly is complemented by a control unit (10) in the form of a bushing which can be coupled to the cam (6) for mutual actuation, which control unit (10) at its top, closed face incorporates a central cone (13) which acts on the upper, open end of the chimney (1) as a sealing element.

2. Pressure control valve, according to claim 1, **characterised in that** the cam (6) has two diametrically opposite, external and lateral vertical grooves (16, 16'), which define two opposing sectors in the cam (6), each of which sectors is provided on its top edge with a first horizontal ramp (17), a markedly inclined intermediate section (18) and a third horizontal section (19) ending in a wide recess and in the corresponding groove (16); while the lower edge has a first horizontal section (20) prolonged at its middle by a pair of vertical ribs (21), a second downwardly inclined section (22), then behind a lip (23) a second downwardly inclined section (24) parallel to the previous section in a substantially lower position, and finally a second lip which ends in a staggered stop (26).

3. Pressure control valve, according to previous claims, **characterised in that** the control unit (10) incorporates interior supports on the top (11) and on the bottom (11a-11b), meant to frame the aforementioned cam (6), with the lower supports (11a-11b) capable of passing through the vertical grooves (16, 16') of the cam (6) in the assembly stage of the control unit (10) and of moving together with the upper supports (11) along the upper and lower edges, respectively, of said cam (6) as the control unit (10) is turned in order to establish a first position corresponding to pressure release, in which situation said lower support is placed between the two ribs (21) of the cam (6) and in which the cone (13) that seals the control unit (10) is slightly separated from the top end of the chimney (1); a second position when the lower supports reach the first lip, where the sealing cone (13) is closed with a pressure generated by the spring (8) of the valve, corresponding to operation at a low pressure; and a third position where the lower supports meet the second lip, with a greater tension of the spring (8) and corresponding to operation at a high pressure.

## Patentansprüche

1. Druckregelventil, insbesondere anwendbar für Druckkocher und zur Gestattung von mindestens drei Arbeitsstellungen vorgesehen, eine zum Ablassen von Druck, eine zum Betrieb bei einem niedrigen Druck und eine weitere zum Betrieb bei einem hohen Druck, umfassend einen im wesentlichen zylindrischen röhrenförmigen Schlot (1), welcher an dessen unterem Ende mit einem mit Außengewinde versehenen Abschnitt (2) versehen ist, der dafür vorgesehen ist, den Kocherdeckel (3) zu durchdringen und mit diesem mittels eines Bolzens (4) unbeweglich verbunden zu sein, und welcher an dessen mittlerem Abschnitt auch mit einem vieleckigen Abschnitt (5) versehen ist, über welchen der Schlot (1) mit einer Nocke (6) befestigt ist, welche wiederum mit einer axialen und auch vieleckigen Öffnung (7) versehen ist, welche die Winkelstellung der Nocke (6) relativ zu dem Schlot (1) festsetzt und dadurch dessen axiale Verschiebung zuläßt; zwischen dem Schlot (1) und der Nocke (6) ist eine Feder (8) angeordnet, welche die Nocke (6) ständig gegen den Kocherdeckel (3) drückt; diese Anordnung ist ergänzt durch eine Regelungseinheit (10) in Form einer Hülse, welche mit der Nocke (6) für gegenseitiges Steuern verbunden werden kann, welche Regelungseinheit (10) an deren oberer, geschlossener Fläche einen zentralen Kegel (13) beinhaltet, welcher auf das obere, offene Ende des Schlotes (1) als ein Dichtelement einwirkt.

2. Druckregelventil nach Anspruch 1, **dadurch gekennzeichnet, daß** die Nocke (6) zwei diametral gegenüberliegende externe und laterale vertikale Rillen (16, 16') hat, welche zwei gegenüberliegende Abschnitte in der Nocke (6) begrenzen, jeder dieser Abschnitte ist an dessen oberer Kante mit einer ersten horizontalen Rampe (17), einem deutlich geneigten mittleren Abschnitt (18) und einem dritten horizontalen Abschnitt (19), der in einer breiten Aussparung und in der zugehörigen Rille (16) endet, versehen.

3. Druckregelventil nach vorhergehenden Ansprüchen, **dadurch gekennzeichnet, daß** die Regelungseinheit (10) innere Träger am oberen Ende (11) und am unteren Ende (11 a-11 b) beinhaltet, gedacht zum einrahmen der oben genannten Nocke (6), wobei die unteren Träger (11a-11b) in der Lage sind, durch die vertikalen Rillen (16, 16') der Nocke (6) in der Zusammenbauphase der Regelungseinheit (10) zu dringen und sich zusammen mit den oberen Trägem (11) entlang der oberen beziehungsweise der unteren Kante der besagten Nocke (6) zu bewegen, wenn die Regelungseinheit (10) gedreht wird, um eine erste zu Druckablaß gehörende Stellung einzunehmen, in welcher Situation der besagte untere Träger zwischen die beiden Rippen (21) der Nocke (6) positioniert ist und in welcher der Kegel (13), der die Regelungseinheit (10) abdichtet, geringfügig von dem oberen Ende des Schlotes (1) getrennt ist; eine zweite Stellung, wenn die unteren Träger die erste Lippe erreichen, in welcher der Dichtungskegel (13) mit einem durch die Feder (8) des Ventils erzeugten Druck geschlossen ist, zu dem Betrieb bei einem niedrigen Druck gehörend; und eine dritte Stellung, in welcher die unteren Träger die zweite Lippe treffen, mit einer größeren Spannung der Feder (8) und zu dem Betrieb bei einem hohen Druck gehörend.

## Revendications

1. Soupape de commande de pression, applicable en particulier aux autocuiseurs et censée permettre au moins trois positions de travail, une pour libérer la pression, une pour le fonctionnement à basse pression et une autre pour le fonctionnement à pression élevée, comprenant une cheminée tubulaire cylindrique de base (1) qui est dotée sur son extrémité inférieure d'un segment fileté (2) destiné à pénétrer dans le couvercle de l'autocuiseur (3) et à être fixé de manière immobile à celui-ci avec un boulon (4) et qui est également dotée sur son segment intermédiaire d'un segment polygonal (5) grâce auquel la cheminée (1) est couplée à une came (6), qui à son tour est dotée d'un orifice axial et également polygonal (7) qui fixe la position angulaire de la came (6) par rapport à la cheminée (1), permettant ainsi son déplacement axial ; placé entre la cheminée (1) et la came (6), on trouve un ressort (8) qui pousse de manière constante la came (6) contre le couvercle (3) de l'autocuiseur ; cet ensemble est complété par une unité de commande (10) se présentant sous la forme d'une douille qui peut être couplée à la came (6) pour l'actionnement mutuel, dont l'unité de commande (10) au niveau de sa face supérieure fermée comprend un cône central (13) qui agit sur l'extrémité supérieure ouverte de la cheminée (1) en tant qu'élément d'étanchéité.

2. Soupape de commande de pression, selon la revendication 1, **caractérisée en ce que** la came (6) possède deux rainures (16, 16') diamétralement opposées, externes et verticales latérales, qui définissent deux secteurs opposés dans la came (6), dont chaque secteur est doté sur son bord supérieur d'une première rampe horizontale (17), d'une section intermédiaire (18) inclinée de manière marquée et d'une troisième section horizontale (19) se terminant dans un large enfoncement et dans la rainure correspondante (16) ; alors que le bord inférieur a une première section horizontale (20) prolongée en son centre par une paire de nervures verticales (21), une seconde section inclinée vers le bas (22), ensuite derrière une lèvre (23), une seconde section inclinée vers le bas (24) parallèle à la précédente section dans une position sensiblement inférieure, et finalement une seconde lèvre qui se termine dans une butée décalée (26).

3. Soupape de commande de pression, selon les revendications précédentes, **caractérisée en ce que** l'unité de commande (10) comprend des supports intérieurs sur le dessus (11) et au fond (11a-11b), censés encadrer la came (6) mentionnée précédemment, dont les supports inférieurs (11a-11b) sont capables de passer à travers les rainures verticales (16, 16') de la came (6) dans l'étage d'assemblage de l'unité de commande (10) et de se déplacer ensemble avec les supports supérieurs (11) le long des bords supérieurs et inférieurs, respectivement, de ladite came (6) lorsque l'unité de commande (10) tourne afin d'établir une première position correspondant à la libération de la pression, situation dans laquelle ledit support inférieur est placé entre les deux nervures (21) de la came (6) et dans laquelle le cône (13) qui fait l'étanchéité de l'unité de commande (10) est légèrement séparé de l'extrémité supérieure de la cheminée (1); une deuxième position lorsque les supports inférieurs atteignent la première lèvre, où le cône d'étanchéité (13) est fermé avec une pression générée par le ressort (8) de la soupape, correspondant au fonctionnement à basse pression ; et une troisième position dans laquelle les supports inférieurs rencontrent la seconde lèvre, avec une tension supérieure du ressort (8) et correspondant au fonctionnement à haute pression.
